# EUROPEAN PATENT SPECIFICATION

(11) **EP 1 175 651 B1**
(45) Date of publication and mention of the grant of the patent: **26.05.2004**
(21) Application number: 00919826.8
(22) Date of filing: 30.03.2000
(51) Int. Cl.: G06F 17/30, G06F 12/08

(54) **HANDLING A REQUEST FOR INFORMATION PROVIDED BY A NETWORK SITE**
BEHANDLUNG EINER ANFRAGE NACH INFORMATIONEN, DIE VON EINEM DIENSTLEISTERS ANGEBOTEN WERDEN
TRAITEMENT D'UNE DEMANDE D'INFORMATION FOURNIE PAR UN SITE DE RESEAU

(30) Priority: 31.03.1999 US 281847
(43) Date of publication of application: 30.01.2002
(73) Proprietor: America Online, Inc., Dulles, VA 20166 (US)
(72) Inventor: HENDREN, C., Hudson, III, Strasburg, VA 22657 (US)
(74) Representative: Tomlinson, Kerry John
(86) International application number: PCT/US2000/008345
(87) International publication number: WO 2000/058870

(56) References cited:
- WO-A-98/53410
- WESSELS D ET AL: "ICP AND THE SQUID WEB CACHE" IEEE JOURNAL ON SELECTED AREAS IN COMMUNICATIONS,US,IEEE INC. NEW YORK, vol. 16, no. 3, 1 April 1998 (1998-04-01), pages 345-357, XP000740055 ISSN: 0733-8716
- CHANKHUNTHOD A ET AL: "A HIERARCHICAL INTERNET OBJECT CACHE" PROCEEDINGS OF THE USENIX ANNUAL TECHNICAL CONFERENCE, 22 January 1996 (1996-01-22), XP000918501
- NEAL D: "The Harvest Object Cache in New Zealand" COMPUTER NETWORKS AND ISDN SYSTEMS,NL,NORTH HOLLAND PUBLISHING. AMSTERDAM, vol. 28, no. 11, 1 May 1996 (1996-05-01), pages 1415-1430, XP004018239 ISSN: 0169-7552

## Description

### Technical Field

This invention relates to handling a request for information provided by a network site.

### Background

Computer networks such as the Internet provide users with a powerful tool for acquiring and distributing information. Since the emergence of the World Wide Web in the early 1990s, users have flocked to the Internet in growing numbers. The corresponding increase in network traffic, however, has increased the length of time users must wait to receive information. During busy periods, users commonly wait several minutes for complex Web-pages to load.

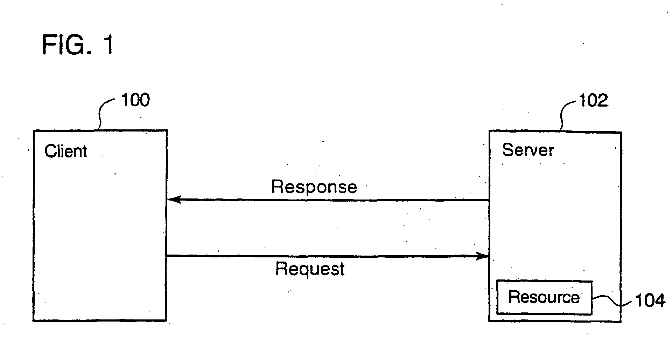

Many computers on the World Wide Web communicate using HTTP (HyperText Transfer Protocol). HTTP defines a client/server relationship between clients requesting resources (e.g., HTML (HyperText Markup Language) documents, audio, video, graphics, executable or interpreted instructions, and other information) and servers offering those resources. As shown in FIG. 1, a client 100 transmits a request for a resource 104 to a server 102 providing the resource 104. The server then transmits a response that can include the requested resource 104 along with other information such as any errors that may have occurred. Software running on the client 100 (e.g., a browser) can present the retrieved resource 104 to the user.

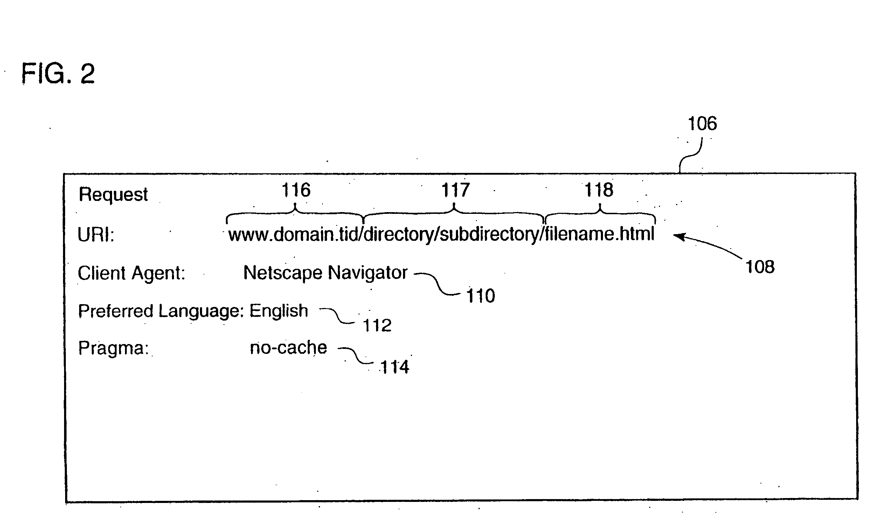

As shown in FIG. 2, an HTTP request 106 includes a URI (Universal Resource Indicator) 108 (e.g., a URL (Universal Resource Locator)) that identifies a requested resource 104 within a hierarchical location scheme. That is, the URL 108 describes a resource with increasing specificity, for example, first by identifying the domain 116 (e.g., "www.domain.com") providing the requested resource 104, then by identifying one or more directories 117 (e.g., "/directory/subdirectory") within the domain 116, and finally by identifying a file 118 (e.g., "filename.html") within the identified set of directories 117.

The HTTP request 106 also can include other information such as the type of client 110 making the request (e.g., a Microsoft® Internet Explorer browser), the preferred language of a user 112, and other information 114. A request 106 can vary in size from a few bytes to several kilobytes.

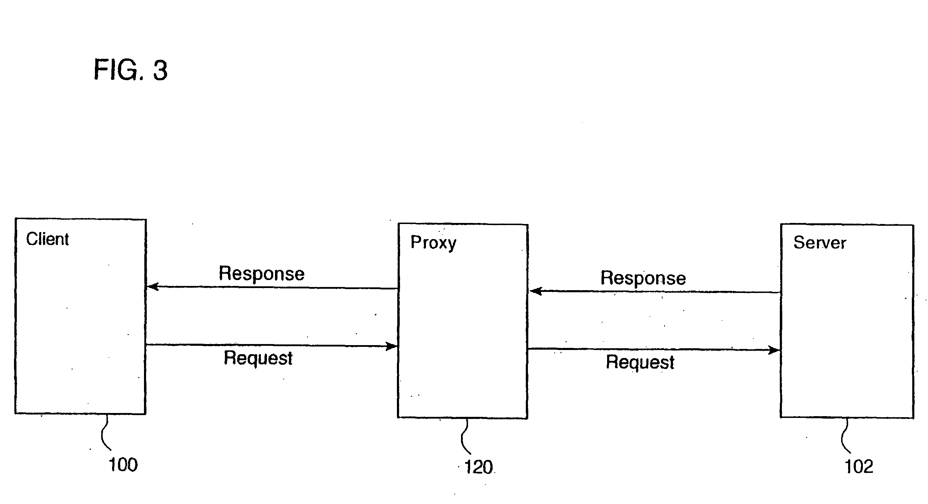

The exchange shown in FIG. 1 is a simplification of network communication. In fact, a request typically passes through many intermediate agents before reaching a server 102. One type of intermediate agent is a proxy 120. As shown in FIG. 3, a proxy 120 receives requests from a client 100 and optionally sends them on to the server 102 providing a requested resource. The proxy 120 receives the server's response 108 and can send the response 108 on to the client 100. The proxy 120 can perform many functions in addition to acting as a conduit for client 100 / server 102 communication. For example, by examining information stored in requests and/or responses, the proxy 120 can act as a filter, for example, by intercepting mature content before it reaches a client 100 used by a child.

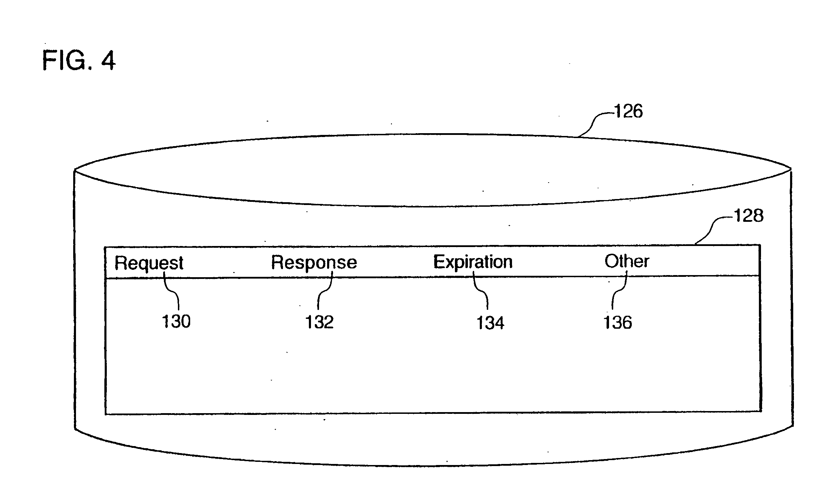

As shown in FIG. 4, many different users often request the same resource (e.g., Web-page). Thus, storing commonly requested resources in a cache 126 can reduce the amount of time it takes to provide a response to a request. As shown, a cache database table 128 stores client requests 130 and previously received server responses 132 to these requests 130. The table 128 also can store an expiration date 134 for a stored response 132 and other information 136. Different cache functions handle storage and retrieval of information from the cache.

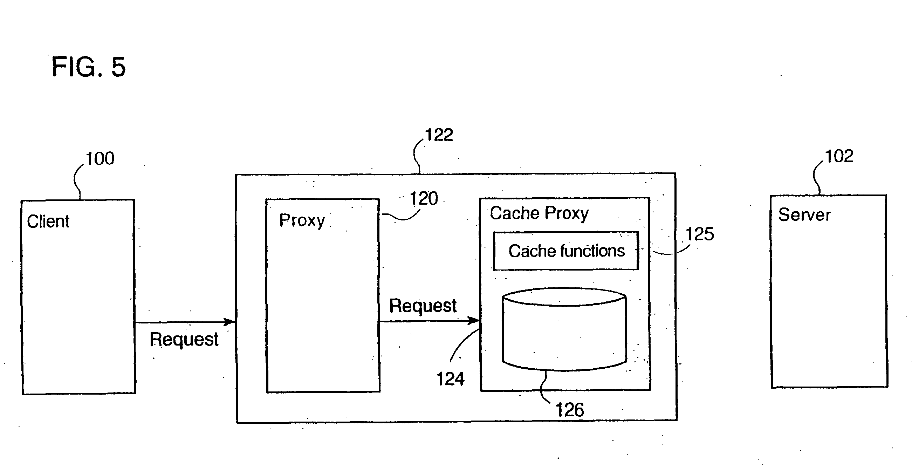

As shown in FIG. 5, a proxy 120 (e.g., a proxy at an ISP (Internet Service Provider)) initially receiving a request can forward the request to a cache proxy 124 that includes a cache database 126 and instructions that implement cache functions 125. These cache functions 125 search, read, and write the cache database 126. When the cache proxy 124 receives a request, the cache proxy 124 searches the cache database 126 for a corresponding response.

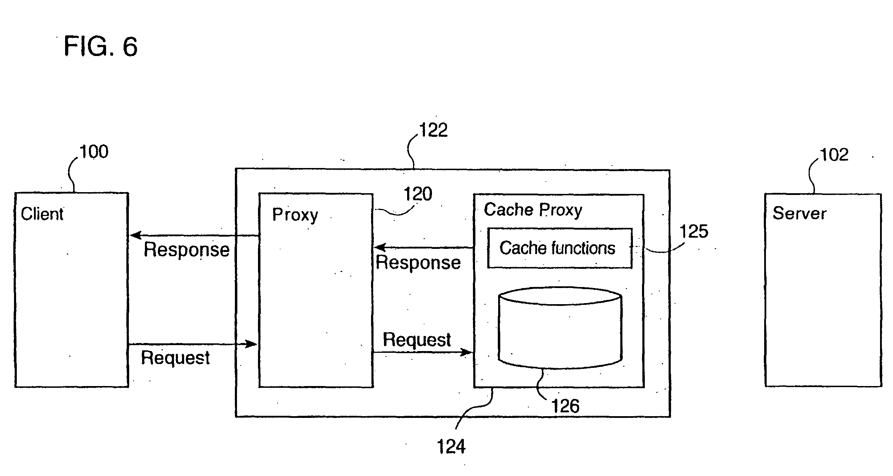

Referring to FIG. 6, if a response corresponding to the request previously has been stored in the cache 124, the cache proxy 124 can return the response without accessing the server 102 from which the requested resource originally came. Eliminating transmission of the request from the proxy 120 to the server 102 and the corresponding transmission of a response from the server 102 back to the proxy 120 reduces client 100 access times and network traffic.

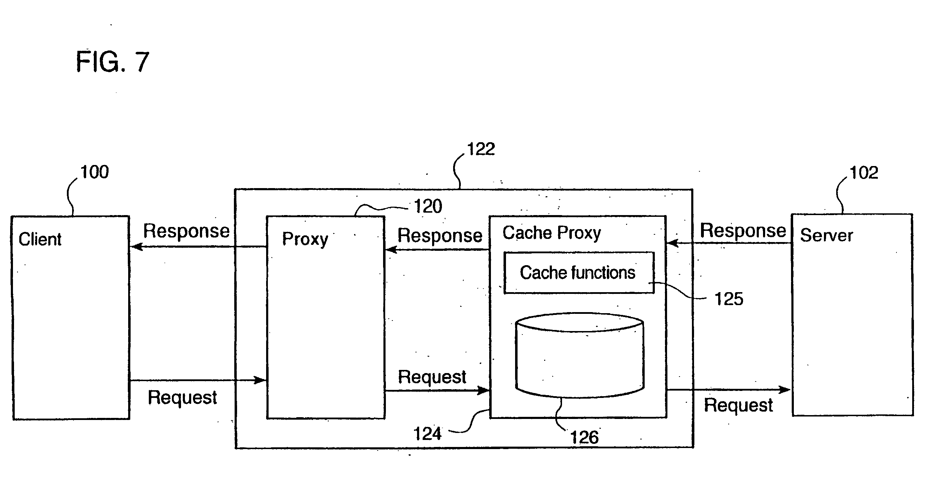

As shown in FIG. 7, if the cache 126 does not store a previous response to a request, the cache proxy 124 transmits a request to the server 102. Alternatively, the cache proxy 124 can transmit a request to the server 102 if the request includes a "pragma = no-cache" directive indicating that the response provided should not be retrieved from a cache. Regardless of whether a cache search failed or a request included a "pragma = no-cache" directive, the cache proxy 124 may store the response provided by the server 106 for future use.

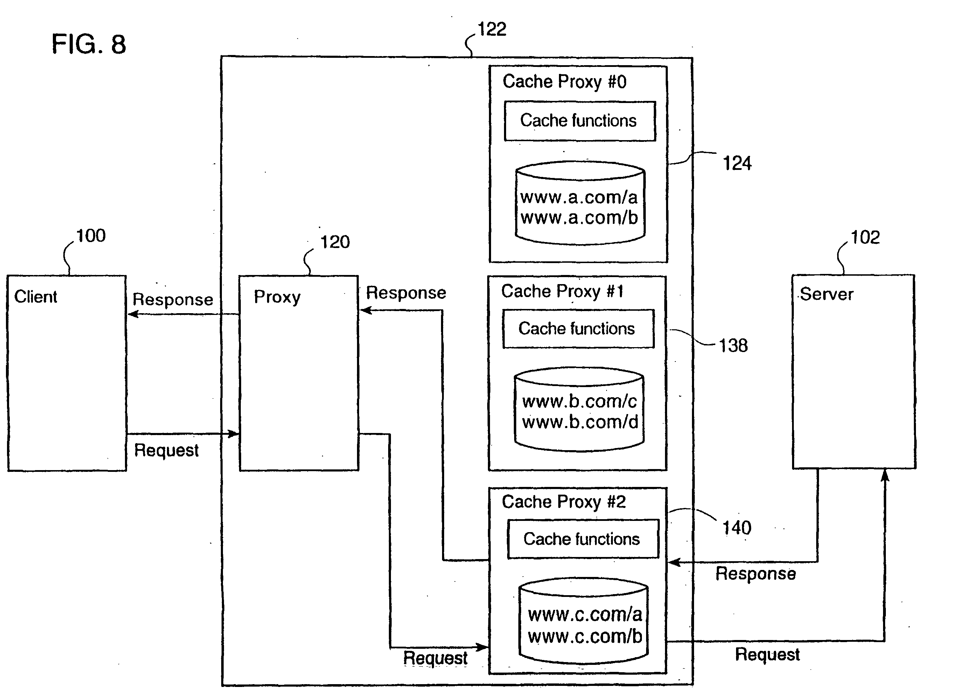

As shown in FIG. 8, a proxy 120 may access multiple cache proxies 124, 138, 140, for example, cache proxies collected within the same ISP 122. This capability enables a single proxy 120 to access a very large number of cached responses. The proxy 120 routes a request received from a client to one of the cache proxies 124, 138, 140 by hashing (e.g., transforming information into a number) the domain 116 included in the URL 108 of the request. For example, hashing a domain of "www.a.com" may yield a "1" while hashing a domain of "www.b.com" may yield a "2." These requests can be sent to cache proxy 124 and 138, respectively. This scheme collects the different resources provided by the same domain into the same cache proxy. For example, "www.a.com/a.html" and "www.a.com/b.html" will share the same domain and reside on the same cache 124

As described above, a cache proxy 124, 138, 140 may not previously have cached a response corresponding to a particular request. In such a case, the cache proxy 124 transmits the request to the server providing a particular resource. For example, as shown, a request for "www.c.com/c" is routed to cache proxy #2 140 based on the request's URI domain information ("www.c.com"). The cache proxy 140, however, must transmit the request to the server 102 providing the resource since the cache does not yet store "www.c.com/c." Upon receipt of the response, the cache proxy 140 can store "www.c.com/c" in its cache for future use.

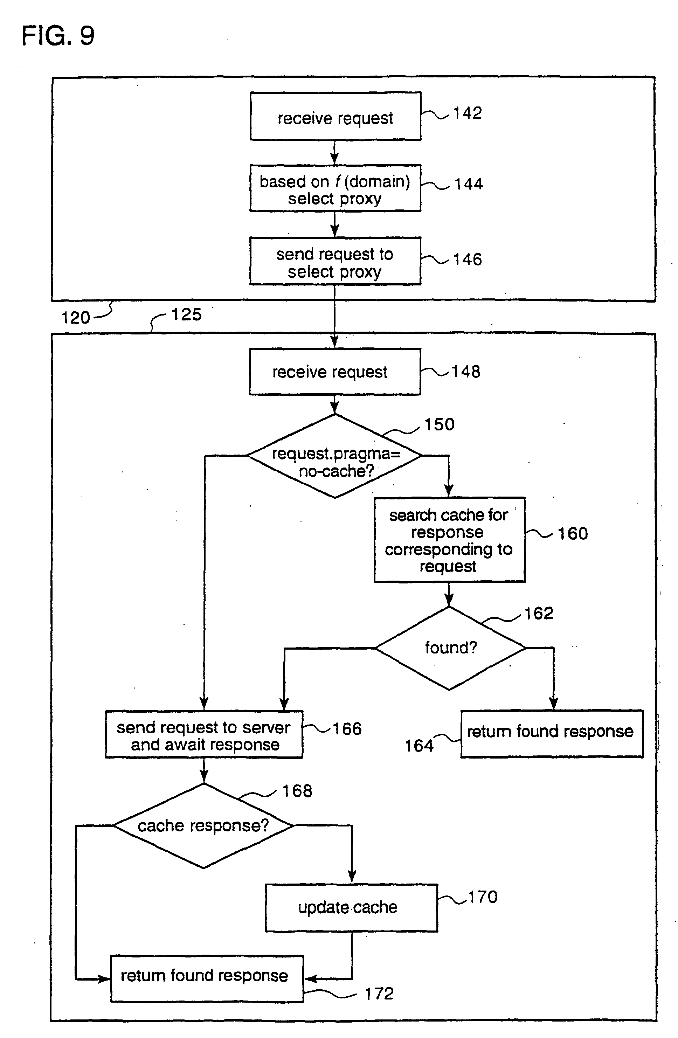

To summarize, as shown in FIG. 9, a proxy 120 using multiple cache proxies receives a request 142 and performs 144 a hash function on the domain information included in the URL of the request. Based on the hash results, the proxy 120 transmits 146 the request to one of the cache proxies 124, 138, and 140.

The cache proxy 124, 138, 140 receiving 148 the request can determine whether to search its cache 150. If the cache proxy searches 160 and finds 162 a response corresponding to the request in its cache, the cache proxy 124, 138, 140 can return 164 the found response to the proxy 120. If the cache proxy decided 150 not to search its cache or failed 162 in its search for the request, the cache proxy sends 166 the request on to the server identified by the request URL. After the cache proxy receives the response, the cache proxy can determine 168 whether to store 170 the response in its cache to speed future requests. The cache proxy then returns 172 the received response to the proxy 120 for transmission to the client making the request.

Wessels D et al: 'ICP and the Squid Web Cache' IEEE Journal on Selected Areas in Communications, US, IEEE Inc. New York, vol. 16, no. 3, 1 April 1998, pages 345-357, XP000740055, ISSN: 0733-8716 discusses the Internet Cache Protocol (ICP) and its implementation in the Squid Web Caching Software.

Chankhunthod A et al: 'A Hierarchical Internet Object Cache' proceedings of the Usenix Annual Technical Conference, 22 January 1996, XP000918501 discusses the design and performance of a hierarchical proxy-cache. The independent claims are characterised over this document.

Neal D: 'The Harvest Object Cache in New Zealand' Computer Networks and ISDN Systems, NL, North Holland Publishing Amsterdam, vol 28, no. 11, 1 May 1996 pages 1415-1430, XP004018239, ISSN: 0169-7552, discusses the use of www caching in New Zealand between 1993 and January 1996, especially on the deployment of the Harvest Cache software.

The present inventor recognized that for some requests, using cache read and write functions is less efficient than bypassing the cache functions altogether.

The present invention provides in one aspect, a method of handling a request for information provided by a network site, comprising receiving a request for the information and a proxy determining whether to bypass cache read and write functions based on the request.

Embodiments may include one or more of the following features. Determining whether to bypass cache read and write functions may include determining whether to bypass one or more cache proxies. The requested information may be a resource such as text, graphics, video, executable instructions, interpretable instructions, and/or sound. The network site providing the information may be a server such as a Web-server. The request may be an HTTP (HyperText Transfer Protocol) request. The request may be received by a proxy such as a front-end proxy of an ISP (Internet Service Provider) that initially receives a request.

Determining whether to bypass may include determining whether the request comprises a POST request and/or determining whether the request comprises a GET request that includes parameters.

Embodiments may include transmitting a request to a server if the determination is made to bypass the cache read and write functions and/or transmitting a request to a cache proxy if the determination is made to not bypass the cache read and write functions.

In another aspect, the present invention provides a computer program product, disposed on a computer readable medium, for handling a request for information provided by a network site, the computer program product including instructions for causing a front-end proxy processor to receive a request for the information and determine whether to bypass cache read and write functions based on the request.

In another aspect, the present invention provides a system for handling a request for information provided by a network site that includes at least one cache proxy and a front-end proxy. The front-end proxy includes instructions that cause the front-end proxy processor to receive a request for information provided by a network site and determine whether to bypass the cache proxies based on the received request.

Advantages may include one or more of the following. Determining whether to perform cache functions at the outset of receiving a response can prevent the time-consuming use of a cache when such use is not likely to provide present or future reductions in access times. The techniques described herein, however, make full use of caching functions when such functions are likely to improve access times. Thus, users enjoy the reduced access times provided by a cache while avoiding delays associated with caching.

Modifying the instructions of a proxy instead of modifying the instructions executed by cache proxies reduces the difficulty of incorporating these techniques into an existing network configuration.

The details of one or more embodiments of the invention are set forth in the accompanying drawings and description below. Other features, objects, and advantages of the invention will be apparent from the description and drawings, and from the claims.
FIG. 1 is a flow diagram of a client/server request/response exchange.
FIG. 2 is a diagram of an HTTP request.
FIG. 3 is a flow diagram of requests and responses exchanged between a client, server, and proxy.
FIG. 4 is a diagram of a cache for storing server responses.
FIG. 5 is a diagram of a proxy and cache proxy.
FIG. 6 is a flow diagram illustrating retrieval of a response from a cache proxy.
FIG. 7 is a flow diagram illustrating storage of a response in a cache proxy.
FIG. 8 is a flow diagram illustrating operation of multiple cache proxies.
FIG. 9 is a flow chart of a process for using multiple cache proxies.
FIG. 10 is a diagram of a proxy that includes instructions for determining whether to bypass cache functions based on a request.
FIG. 11 is a flow diagram of a proxy bypassing cache functions.
FIG. 12 is a flow diagram of a proxy that selects a cache based on information that indicates the location of a resource within a domain.
FIG. 13 is a flow chart of proxy instructions for bypassing cache functions and selecting a cache.
FIG. 14 is a flow chart of proxy instructions for determining whether to bypass cache functions.
Like reference numbers and designations in the various drawings indicate like elements.

### Detailed Description

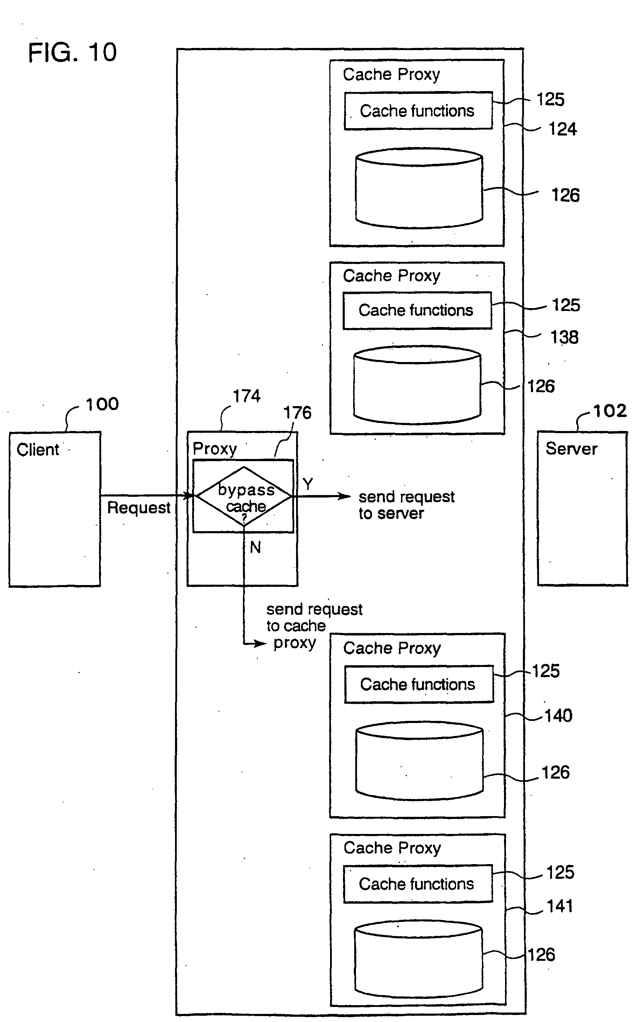

Referring to FIG. 10, a proxy 174 uses multiple caches 126 to store server responses. As shown, the caches 126 and cache functions 125 are included in cache proxies 124, 138, 140, 141. Because communications between the proxy 174 and a cache proxy 124, 138, 140, 141 can conform to HTTP standards, encapsulating a cache 124 and its associated functions 125 in a cache proxy offers programmers a simple method of integrating cache functions into existing processing. A cache proxy, however, is not necessarily required to implement cache functions (e.g., instructions that search, read, or write cache information). For example, a single monolithic proxy could manage different caches without using independent cache proxies.

Although caches can reduce the amount of time required to produce a response for a given request, the use of a cache is not without costs. For example, searching the cache for a particular request can be time consuming. When such a search is unsuccessful, the use of a cache actually increases the amount of time taken to process a request. In many cases, the extra time spent searching a cache unsuccessfully and storing a server's subsequent response is justified by the time savings enjoyed by future requests. However, as will be discussed, this is not always the case.

As shown in FIG. 10, the proxy 174 includes instructions 176 that determine whether to bypass cache functions 125 based on a received request. Conditional use of cache functions 125 enables the proxy 174 to identify situations where cache functions 125 are likely to slow processing of a current request without a compensating reduction in the time needed to process future requests. For example, attributes of a request may indicate that a cache is unlikely to have previously stored a corresponding response. The request's attributes may further indicate that any response provided by a server is unlikely to be added to the cache for future use. In such circumstances, executing cache functions 125 offers neither short-term nor long-term reductions in access times. As a result of this cost-benefit analysis, the conditional use of cache functions enables a proxy to provide the benefits of cache functions without needlessly suffering their potential inefficiencies.

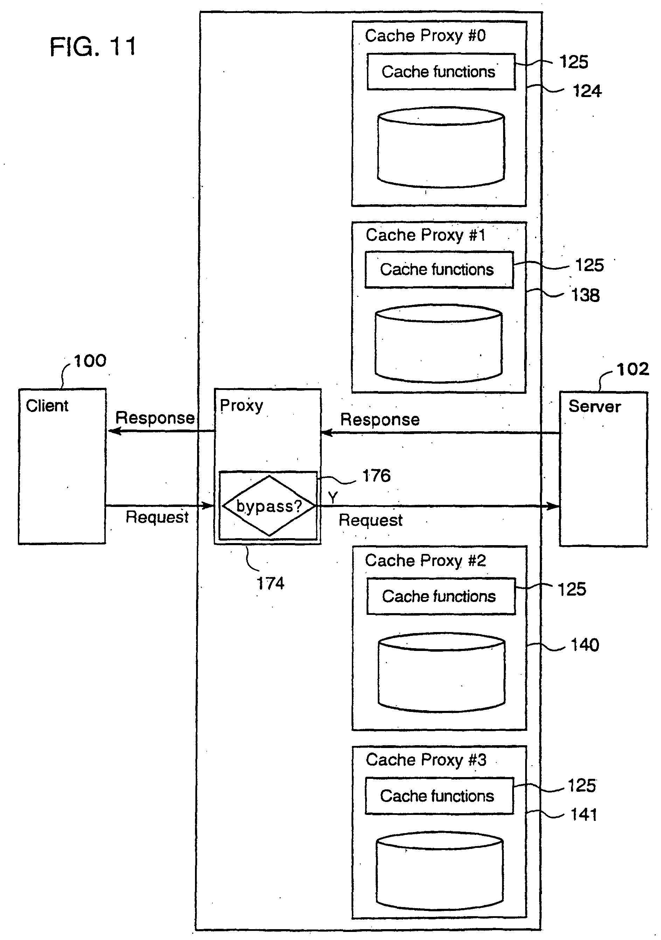

Referring to FIG. 11, upon receiving a request, the instructions 176 for the proxy 174 determine whether to bypass caching functions based on the request. If the proxy 174 determines not to use cache functions 125, the proxy 174 sends a request to the server 104. Bypassing the caches 124, 138, 140, 141 saves the amount of time needed to search a cache and to store a response in the cache database.

Bypassing the cache proxies 124, 138, 140, 141 also reduces the number of agents that process a request. This eliminates the computational overhead that would otherwise be added by a cache proxy that processes a request. For example, each agent typically parses a received request to extract information. While parsing is conceptually straightforward, parsing can be computationally intensive if a request is large and/or includes variable length data. Hence, eliminating parsing performed by a cache proxy 124, 138, 140, 141 can produce surprisingly large reductions in access times.

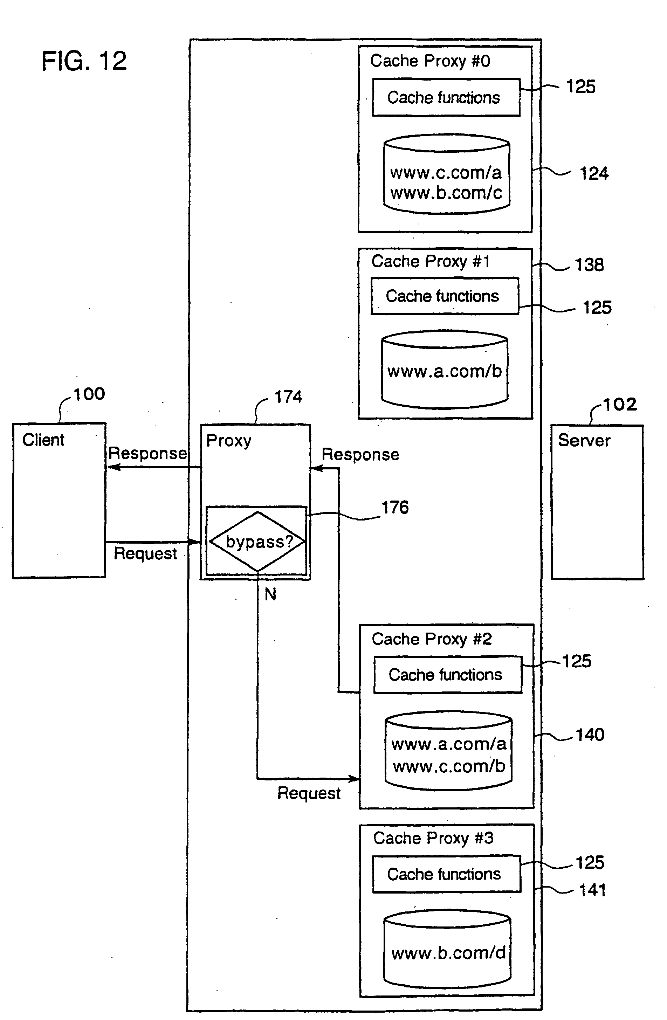

Referring to FIG. 12, if the instructions 176 for proxy 174 decide to use cache functions, the proxy 174 sends the request to a cache proxy 124, 138, 140, 141. The proxy 174 selects a cache based at least in part on information 117, 118 (FIG. 2) included in the URL of a request that identifies the location of a resource within a domain. For example, the proxy 174 could select a cache based on the resource location (e.g., "directory/subdirectory/a.html") or the resource location in addition to the URL domain (e.g., "www.domain.com/directory/subdirectory/a.html"). For example, the proxy 174 can implement a hash function that transforms a completes URL into a number. For example, a hash function could add the ASCII (American Standard Code for Information Interchange) values of all the characters in the URL and modulo divide by the number of caches. Hashing to a number between 1 and a prime number is believed to produce an even distribution of values. Hence, a system that includes a prime number of caches may evenly distribute responses among the caches. Other cache functions can easily be used instead of the sample function described above. Additionally, the hash described and others can be used in systems that do not use a prime number of caches.

Based on the results of the hash function, the proxy instructions can select a cache. For example, if the hash of "www.c.com/a" yielded "0" and an Internet Service Provider had four cache proxies, the proxy 174 could send the request to cache proxy #0 124.

Selecting a cache based on information that indicates the location of a resource within a domain distributes different resources provided by a server 104 across multiple caches 124, 138, 140, 141. For example, the resources "a" and "b" provided by "www.a.com" are cached by cache proxies 140 and 138, respectively. Because a handful of domains receive the large majority of requests (e.g., "www.NewYorkTimes.com"), spreading the resources provided by these servers over multiple caches enables more efficient use of the caches as each cache reads and writes a substantially equal number of requests and responses. Thus, the hashing scheme enforces load balancing and no cache becomes overloaded with requests while other caches are underutilized.

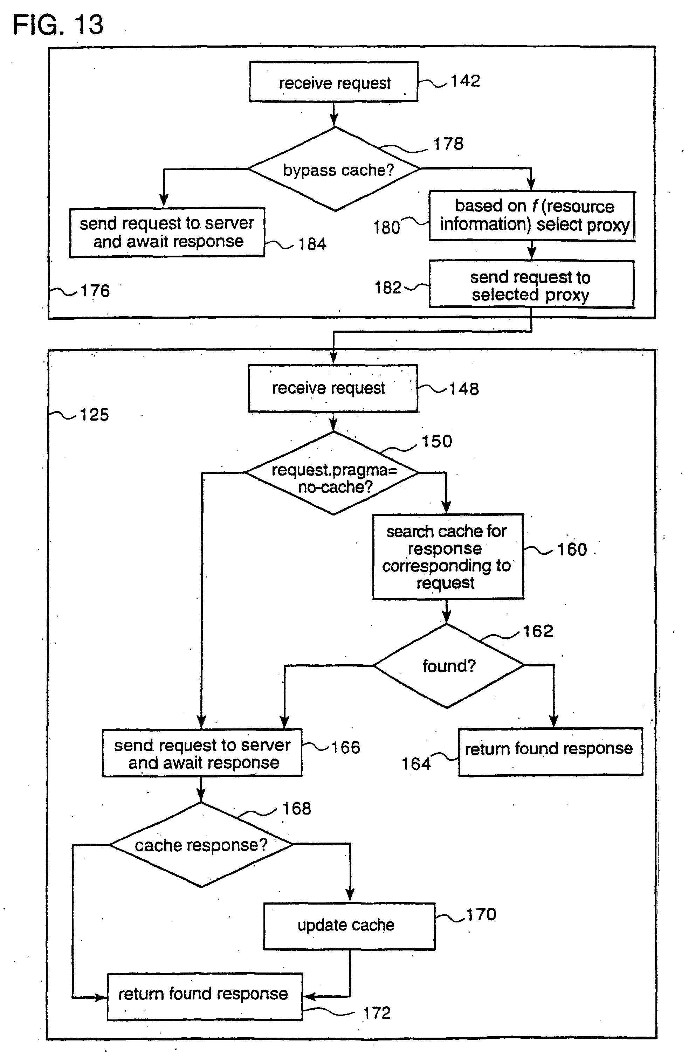

Referring also to FIG. 13, after a proxy receives a request 142, the proxy instructions 176 determine 178 whether or not to bypass cache functions 125. If the proxy instructions 176 decide to bypass cache functions 125, the proxy sends 184 the request on to the server and awaits the server's response for subsequent transmission back to the client.

If the proxy instructions 176 decide not to bypass cache functions 125, the proxy instructions 176 select 180 a cache based on resource information included in the URL of the request. The proxy instructions 176 send the request to the selected cache 182. As the bypassing and selection instructions are implemented by the proxy 174, the cache proxies 124, 138, 140, 141 need not be altered. As a result, the cache bypassing and selection mechanisms are transparent to the cache proxies. This enables an administrator to integrate the bypassing and cache selection techniques in an existing network of proxies with a minimum of reconfiguration.

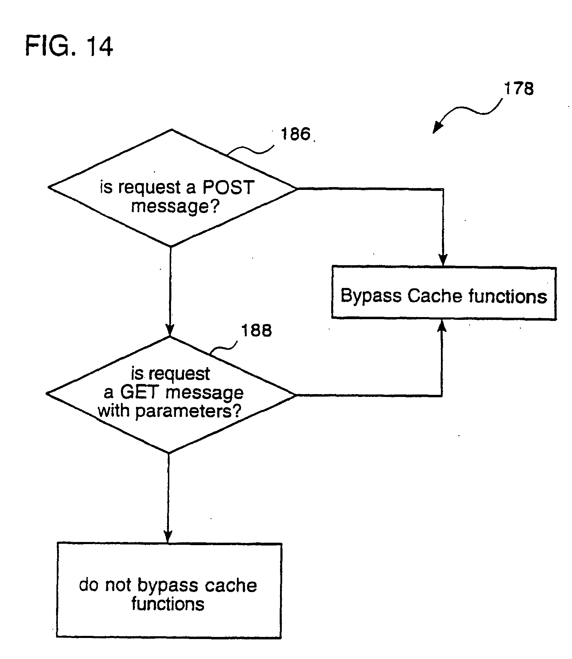

Referring to FIG. 14, the proxy 174 can determine whether to bypass caching functions by examining attributes of a received request. For example, an HTTP request can identify itself as being a "POST" or "GET" request. A "POST" request that "posts" (i.e., sends) data to a server such as information a user entered into a web-page form. A "GET" request "gets" a resource identified by a URI (e.g., "GET www.domain.com/a.html"). A "GET" request can include parameters for processing by a server. Such "GET" requests include information following a "?" delimiter. For example, "GET www.a.com/cgi-bin/ProcessName.cgi?Name=JohnDoe" sends the "Name=JohnDoe" as a parameter.

The HTTP specification mandates that responses to both "POST" and "GET" requests that include parameters must not be cached. This prevents users from receiving inaccurate information. For example, if a first POST request includes data entered by a user into an order form for widgets, the server's response "thank you for your order of widgets" should not be cached. If such a response was cached, the user's second order of widgets would not reach the server but nevertheless result in a cached response of "thank you for your order of widgets."

Thus, these requests can neither be satisfied by accessing a cache nor can responses to these requests add to the information stored in a cache. By making a single determination to bypass caching functions 125 based on whether a request is a POST request 186 or a GET request that includes parameter 188, a proxy 174 can reduce the amount time needed to service a request.

An administrator may choose to bypass cache functions based on other request information. For example, because CGI (Common Gateway Interface) script responses often expire very quickly and often produce different responses for the same requests, an administrator may elect to bypass cache functions for requests including the letters "cgi" in the request URL.

The methods and techniques described here may be implemented in digital electronic circuitry, or in computer hardware, firmware, software, or'in combinations of them.

Apparatus embodying these techniques may include appropriate input and output devices, a computer processor, and a computer program product tangibly embodied in a machine-readable storage device for execution by a programmable processor. A process embodying these techniques may'be performed by a programmable processor executing a program of instructions to perform desired functions by operating on input data and generating appropriate output. The techniques may advantageously be implemented in one or more computer programs that are executable on a programmable system including at least one programmable processor coupled to receive data and instructions from, and to transmit data and instructions to, a data storage system, at least one input device, and at least one output device. Each computer program may be implemented in a high-level procedural or object-oriented programming language, or in assembly or machine language if desired; and in any case, the language may be a compiled or interpreted language. Suitable processors include, by way of example, both general and special purpose microprocessors. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing may be supplemented by, or incorporated in, specially-designed ASICs (application-specific integrated circuits).

A number of embodiments of the present invention have been described. Nevertheless, it will be understood that various modifications may be made without departing from the scope of the invention. For example, the distribution of the functions and components need not be as shown, but can instead be distributed over any number of computers or networks. Additionally, although we use the terms client and server, any given program may be capable of acting as either a client or server; our use of these terms may refer only to the role being performed by the program for a particular connection, rather than to the program's capabilities in general. Accordingly, other embodiments are within the scope of the following claims.

## Claims

1. A method of handling a request (106) for information provided by a network site, the method comprising:
receiving a request for the information; and being **characterised in that**:
a proxy (120) determines whether to bypass (176) cache read and write functions (125) based on the request (106).

2. The method of claim 1, wherein the determining whether to bypass comprises determining whether to bypass (176) one or more cache proxies (124, 138, 140 or 141).

3. The method of claim 1, wherein the requested information comprises a resource.

4. The method of claim 1, wherein the requested information comprises text, graphics, video, executable instructions, interpretable instructions, and sound.

5. The method of claim 1, wherein the network site comprises a server (102).

6. The method of claim 1, wherein the request comprises an HTTP (HyperText Transfer Protocol) request.

7. The method of claim 1, wherein determining comprises determining (174) whether the request comprises a POST request.

8. The method of claim 1, wherein determining comprises determining (174) whether the request comprises a GET request that includes parameters.

9. The method of claim 1, wherein receiving a request comprises receiving a request at a proxy.

10. The method of claim 1, further comprising transmitting a request to a server if the determination is made to bypass (176) the cache read and write functions (125).

11. The method of claim 1, further comprising transmitting a request to a cache proxy (124, 138, 140 or 141) if the determination is made to not bypass (176) the cache read and write functions (125).

12. The method of claim 1, wherein the request for information comprises a request for a resource provided by a network server, the method comprising:
receiving an HTTP (HyperText Transfer Protocol) request for the resource;
a proxy determining whether to bypass (176) one or more cache proxies (124, 138, 140 or 141) based on the request;
transmitting a request to a server if the determination is made to bypass (176) the cache proxies (124, 138, 140 or 141); and
transmitting a request to one of the cache proxies (124, 138, 140 or 141) if the determination is made to not bypass (176) the cache proxies (124, 138, 140 or 141).

13. A computer program product, disposed on a computer readable medium, for handling a request (106) for information provided by a network site, the computer program product including instructions for causing front-end proxy processor to:
receive a request for the information; and
**characterised by** the computer program product including further instructions for causing a front-end proxy processor to:
determine whether to bypass (176) cache read and write functions (125) based on the request (106).

14. The computer program product of claim 13, wherein the instructions that cause the front-end proxy processor to determine whether to bypass comprise instructions that cause the front-end proxy processor to determine whether to bypass (176) one or more cache proxies (124, 138, 140 or 141).

15. The computer program product of claim 13, wherein the request (142) comprises an HTTP (HyperText Transfer Protocol) request.

16. The computer program product of claim 13, wherein the instructions for causing the front-end proxy processor to determine comprise instructions for causing the front-end proxy processor to determine (174) whether the request comprises a POST request.

17. The computer program product of claim 13, wherein the instructions that cause the front-end proxy processor to determine comprise instructions that cause the front-end proxy processor to determine (174) whether the request comprises a GET request that includes parameters.

18. The computer program product of claim 13, further comprising instructions that cause the front-end proxy processor to transmit a request to a server if the determination is made to bypass (176) the cache read and write functions (125).

19. The computer program product of claim 13, further comprising instructions that cause a front-end proxy processor to transmit a request to a cache proxy (124, 138, 140 or 141) if the determination is made to not bypass (176) the cache read and write functions (125).

20. A system for handling a request for information provided by a network site, the system comprising:
at least one cache proxy (124, 138, 140 or 141); and
a front-end proxy (120), the front-end proxy (120) including instructions (176) that cause the front-end proxy processor to:
receive a request for information provided by a network site; and being **characterised in that** the front-end proxy further includes instructions (176) that cause the front-end proxy processor to
determine whether to bypass the cache proxies based on the received request.

21. The method of claim 1, wherein determining whether to bypass (176) cache read and write functions (125) based on the request, comprises examining the attributes of the request.

22. The method of claim 12, wherein determining whether to bypass (176) one or more cache proxies (124, 138, 140 or 141) based on the request, comprises examining the attributes of the request.

23. The computer program product of claim 13, wherein determining whether to bypass (176) cache read and write functions (125) based on the request, comprises examining the attributes of the request.

24. The system of claim 20, wherein determining whether to bypass (176) the cache proxies (124, 138, 140 or 141) based on the request, comprises examining the attributes of the request.

## Patentansprüche

1. Verfahren zum Behandeln einer Anfrage (106) nach Informationen, die von einer Netzwerkstelle bzw. Netzwerkseite bereitgestellt werden, wobei das Verfahren den folgenden Schritt umfaßt:
Empfangen einer Anfrage nach der Information, und **dadurch gekennzeichnet ist, daß**:
ein Proxy bzw. Stellvertreterdienst (120) feststellt, ob Hintergrundspeicher-(Cache)-Lese- und -Schreibfunktionen (125) ausgehend von der Anfrage (106) zu umgehen (176) sind.

2. Verfahren nach Anspruch 1, in dem das Feststellen, ob zu umgehen ist, das Feststellen umfaßt, ob einer oder mehrere Cache-Proxies (124, 138, 140 oder 141) zu umgehen (176) sind.

3. Verfahren nach Anspruch 1, in dem die angefragte Information eine Ressource bzw. ein Betriebsmittel umfaßt.

4. Verfahren nach Anspruch 1, in dem die angefragte Information Text, Grafiken, Video, ausführbare Anweisungen, interpretierbare Anweisungen und Klang umfaßt.

5. Verfahren nach Anspruch 1, in dem die Netzwerkstelle einen Server bzw. Hauptrechner (102) umfaßt.

6. Verfahren nach Anspruch 1, in dem die Anfrage eine HTTP (Hypertexttransferprotokoll) -Anfrage umfaßt.

7. Verfahren nach Anspruch 1, in dem das Feststellen das Feststellen (174) umfaßt, ob die Anfrage eine POST-Anfrage umfaßt.

8. Verfahren nach Anspruch 1, in dem das Feststellen das Feststellen (174) umfaßt, ob die Anfrage eine Parameter beinhaltende GET-Anfrage umfaßt.

9. Verfahren nach Anspruch 1, in dem das Empfangen einer Anfrage das Empfangen einer Anfrage in einem Proxy umfaßt.

10. Verfahren nach Anspruch 1, das des weiteren den Schritt des Übermittelns einer Anfrage an einen Server umfaßt, wenn die Feststellung getroffen wurde, daß die Cache-Lese- und -Schreibfunktionen (125) zu umgehen (176) sind.

11. Verfahren nach Anspruch 1, das des weiteren den Schritt des Übermittelns einer Anfrage an einen Cache-Proxy (124, 138, 140 oder 141) umfaßt, wenn die Feststellung getroffen wurde, daß die Cache-Lese- und -Schreibfunktionen (125) nicht zu umgehen (176) sind.

12. Verfahren nach Anspruch 1, in dem die Anfrage nach Informationen eine Anfrage nach einer von einem Netzwerkserver bereitgestellten Ressource umfaßt, wobei das Verfahren folgende Schritte umfaßt:
Empfangen einer HTTP (Hypertexttransferprotokoll) -Anfrage nach der Ressource,
Feststellen durch einen Proxy, ob einer oder mehrere Cache-Proxies (124, 138, 140 oder 141) ausgehend von der Anfrage zu umgehen (176) sind,
Übermitteln einer Anfrage an einen Server, wenn die Feststellung getroffen wurde, die Cache-Proxies (124, 138, 140 oder 141) zu umgehen (176), und
Übermitteln einer Anfrage an einen der Cache-Proxies (124, 138, 140 oder 141), wenn die Feststellung getroffen wurde, die Cache-Proxies (124, 138, 140 oder 141) nicht zu umgehen (176).

13. Computerprogrammprodukt, das auf einem computerlesbaren Medium niedergelegt ist, zum Behandeln einer Anfrage (106) nach Informationen, die von einer Netzwerkstelle bereitgestellt werden, wobei das Computerprogramm Anweisungen beinhaltet, die einen Benutzer-Proxyprozessor veranlassen:
eine Anfrage nach der Information zu empfangen, und **dadurch gekennzeichnet, daß** das Computerprogrammprodukt weitere Anweisungen beinhaltet, die einen Benutzer-Proxyprozessor veranlassen:
festzustellen, ob Cache-Lese- und -Schreibfunktionen (125) ausgehend von der Anfrage (106) zu umgehen (176) sind.

14. Computerprogrammprodukt nach Anspruch 13, in dem die Anweisungen, die den Benutzer-Proxyprozessor veranlassen festzustellen, ob zu umgehen ist, Anweisungen umfassen, die den Benutzer-Proxyprozessor veranlassen festzustellen, ob einer oder mehrere Cache-Proxies (124, 138, 140 oder 141) zu umgehen (176) sind.

15. Computerprogrammprodukt nach Anspruch 13, in dem die Anfrage (142) ein HTTP (Hypertexttransferprotokoll) Anfrage umfaßt.

16. Computerprogrammprodukt nach Anspruch 13, in dem die Anweisungen, die den Benutzer-Proxyprozessor veranlassen festzustellen, Anweisungen umfassen, die den Benutzer-Proxyprozessor veranlassen festzustellen (174), ob die Anfrage eine POST-Anfrage umfaßt.

17. Computerprogrammprodukt nach Anspruch 13, in dem die Anweisungen, die den Benutzer-Proxyprozessor veranlassen festzustellen, Anweisungen umfassen, die den Benutzer-Proxyprozessor veranlassen festzustellen (174), ob die Anfrage eine Parameter beinhaltende GET-Anfrage umfaßt.

18. Computerprogrammprodukt nach Anspruch 13, das des weiteren Anweisungen umfaßt, die den Benutzer-Proxyprozessor veranlassen, eine Anfrage an einen Server zu übermitteln, wenn die Feststellung getroffen wurde, daß die Cache-Lese-und -Schreibfunktionen (125) zu umgehen (176) sind.

19. Computerprogrammprodukt nach Anspruch 13, das des weiteren Anweisungen umfaßt, die einen Benutzer-Proxyprozessor veranlassen, eine Anfrage an einen Cache-Proxy (124, 138, 140 oder 141) zu übermitteln, wenn die Feststellung getroffen wurde, die Cache-Lese- und -Schreibfunktionen (125) zu umgehen (176).

20. System zum Handhaben einer Anfrage nach Informationen, die von einer Netzwerkstelle bereitgestellt werden, wobei das System folgendes umfaßt:
mindestens einen Cache-Proxy (124, 138, 140 oder 141), und
einen Benutzer-Proxy (120), wobei der Benutzer-Proxy (120) Anweisungen (176) beinhaltet, die den Benutzer-Proxyprozessor veranlassen:
eine Anfrage nach Informationen zu empfangen, die von einer Netzwerkstelle bereitgestellt werden, und **dadurch gekennzeichnet, daß** der Benutzer-Proxy des weiteren Anweisungen (176) beinhaltet, die den Benutzer-Proxyprozessor veranlassen
festzustellen, ob die Cache-Proxies ausgehend von der empfangenen Anfrage zu umgehen sind.

21. Verfahren nach Anspruch 1, in dem das Feststellen, ob Cache-Lese- und -Schreibfunktionen (125) ausgehend von der Anfrage zu umgehen (176) sind, das Prüfen der Attribute der Anfrage umfaßt.

22. Verfahren nach Anspruch 12, in dem das Feststellen, ob einer oder mehrere Cache-Proxies (124, 138, 140 oder 141) ausgehend von der Anfrage zu umgehen (176) sind, das Prüfen der Attribute der Anfrage umfaßt.

23. Computerprogrammprodukt nach Anspruch 13, in dem das Feststellen, ob Cache-Lese- und -Schreibfunktionen (125) ausgehend von der Anfrage zu umgehen (176) sind, das Prüfen der Attribute der Anfrage umfaßt.

24. System nach Anspruch 20, in dem das Feststellen, ob die Cache-Proxies (124, 138, 140 oder 141) ausgehend von der Anfrage zu umgehen (176) sind, das Prüfen der Attribute der Anfrage umfaßt.

## Revendications

1. Un procédé de traitement d'une requête (106) pour une information fournie par un site de réseau, le procédé comprenant :
une réception d'une requête pour l'information ; et étant **caractérisé en ce que** :
un proxy (120) détermine s'il y a évitement (176) des fonctions de lecture et d'écriture de cache (125) basé sur la requête (106).

2. Le procédé de la revendication 1, selon lequel la détermination s'il y a évitement comprend une détermination s'il y a évitement (176) d'un ou de plusieurs proxy-caches (124, 138, 140 ou 141).

3. Le procédé de la revendication 1, selon lequel l'information requise comprend une ressource.

4. Le procédé de la revendication 1, selon lequel l'information requise comprend un texte, des graphiques, une vidéo, des instructions exécutables, des instructions interprétables, et un son.

5. Le procédé de la revendication 1, selon lequel le site de réseau comprend un serveur (102).

6. Le procédé de la revendication 1, selon lequel la requête comprend une requête HTTP (Hypertext Transfer Protocol).

7. Le procédé de la revendication 1, selon lequel la détermination comprend une détermination (174) si la requête comprend une requête POST.

8. Le procédé de la revendication 1, selon lequel la détermination comprend une détermination (174) si la requête comprend une requête GET qui inclut des paramètres.

9. Le procédé de la revendication 1, selon lequel la réception d'une requête comprend une réception d'une requête par un proxy.

10. Le procédé de la revendication 1, comprenant en outre une transmission d'une requête à un serveur si la détermination est réalisée par évitement (176) des fonctions de lecture et d'écriture de cache (125).

11. Le procédé de la revendication 1, comprenant en outre une transmission d'une requête à un proxy-cache (124, 138, 140 ou 141) si la détermination est réalisée par non évitement (176) des fonctions de lecture et d'écriture de cache (125).

12. Le procédé de la revendication 1, selon lequel la requête pour une information comprend une requête pour une ressource fournie par un serveur de réseau, le procédé comprenant :
une réception d'une requête HTTP (Hypertext Transfer Protocol) pour la ressource ;
un proxy déterminant s'il y a évitement (176) d'un ou plusieurs proxy-caches (124, 138, 140 ou 141) basé sur la requête ;
une transmission d'une requête à un serveur si la détermination est réalisée par évitement (176) des proxy-caches (124, 138, 140 ou 141) ; et
une transmission d'une requête à l'un des proxy-caches (124, 138, 140 ou 141) si la détermination est réalisée par non évitement (176) des proxy-caches (124, 138, 140 ou 141).

13. Un produit de programme d'ordinateur, installé dans un moyen de lecture d'ordinateur, pour le traitement d'une requête (106) pour une information fournie par un site de réseau, le produit de programme d'ordinateur incluant des instructions pour entraîner le processeur du proxy frontal à :
recevoir une requête pour l'information ; et
**caractérisé par** le produit de programme d'ordinateur incluant en outre des instructions pour entraîner le proxy frontal à :
déterminer s'il y a évitement (176) des fonctions de lecture et d'écriture de cache (125) basé sur la requête (106).

14. Le produit de programme d'ordinateur de la revendication 13, selon lequel les instructions qui entraînent le processeur du proxy frontal à déterminer s'il y a évitement comprennent des instructions qui entraînent le processeur de proxy frontal à déterminer s'il y a évitement (176) d'un ou de plusieurs proxy-caches (124, 138, 140 ou 141).

15. Le produit de programme d'ordinateur de la revendication 13, selon lequel la requête (142) comprend une requête HTTP (Hypertext Transfer Protocol).

16. Le produit de programme d'ordinateur de la revendication 13, selon lequel les instructions pour entraîner le processeur de proxy frontal à déterminer comprennent des instructions pour entraîner le processeur de proxy frontal à déterminer (174) si la requête comprend une requête POST.

17. Le produit de programme d'ordinateur de la revendication 13, selon lequel les instructions qui entraînent le processeur de proxy frontal à déterminer comprennent des instructions qui entraînent le processeur de proxy frontal à déterminer (174) si la requête comprend une requête GET qui inclut des paramètres.

18. Le produit de programme d'ordinateur de la revendication 13, comprenant en outre des instructions qui entraînent le processeur de proxy frontal à transmettre une requête à un serveur si la détermination est réalisée par évitement (176) des fonctions de lecture et d'écriture de cache (125).

19. Le produit de programme d'ordinateur de la revendication 13, comprenant en outre des instructions qui entraînent le processeur de proxy frontal à transmettre une requête à un proxy-cache (124, 138, 140 ou 141) si la détermination est réalisée par non évitement (176) des fonctions de lecture et d'écriture de cache (125).

20. Un système pour le traitement d'une requête pour une information fournie par un site de réseau, le système comprenant :
au moins un proxy-cache (124, 138, 140 ou 141) ; et
un proxy frontal (120), le proxy frontal (120) incluant des instructions (176) qui entraînent le processeur du proxy frontal à :
recevoir une requête pour une information fournie par le site de réseau ; et étant **caractérisé en ce que** le proxy frontal inclut en plus des instructions (176) qui entraînent le processeur de proxy frontal à
déterminer s'il y a évitement des proxy-caches basé sur la requête reçue.

21. Le procédé de la revendication 1, selon lequel la détermination s'il y a évitement (176) des fonctions de lecture et d'écriture de cache (125) basé sur la requête, comprend un examen des attributs de la requête.

22. Le procédé de la revendication 12, selon lequel la détermination s'il y a évitement (176) d'un ou de plusieurs proxy-caches (124, 138, 140 ou 141) basé sur la requête, comprend un examen des attributs de la requête.

23. Le produit de programme d'ordinateur de la revendication 13, selon lequel la détermination s'il y a évitement (176) des fonctions de lecture et d'écriture de cache (125) basé sur la requête, comprend un examen des attributs de la requête.

24. Le système de la revendication 20, selon lequel la détermination s'il y a évitement (176) des proxy-caches (124, 138, 140 ou 141) basé sur la requête, comprend un examen des attributs de la requête.
